# EUROPÄISCHE PATENTSCHRIFT

(11) **EP 1 045 169 B1**
(45) Veröffentlichungstag und Bekanntmachung des Hinweises auf die Patenterteilung: **29.10.2003**
(21) Anmeldenummer: 00103021.2
(22) Anmeldetag: 15.02.2000
(51) Int. Cl.: F16H 1/20, F16H 57/02

(54) **Getriebereihe**
Transmission series
Série de blocs d'engrenage

(30) Priorität: 16.04.1999 DE 19917145
(43) Veröffentlichungstag der Anmeldung: 18.10.2000
(73) Patentinhaber: Flender Tübingen GmbH, 72072 Tübingen (DE)
(72) Erfinder: Schnurr, Wolfgang, 72147 Nehren (DE); Böing, Georg, 72108 Rottenburg (DE)
(74) Vertreter: Möbus, Daniela, Dr.-Ing.

(56) Entgegenhaltungen:
- DE-A- 2 745 607
- DE-U- 9 404 877
- US-A- 3 673 885
- PATENT ABSTRACTS OF JAPAN vol. 1996, no. 05, 31. Mai 1996 (1996-05-31) -& JP 08 021519 A (JAPAN SERVO CO LTD), 23. Januar 1996 (1996-01-23)

## Beschreibung

Die Erfindung betrifft eine Getriebereihe mit Stirnradgetrieben und mit Flachgetrieben mit zweistufigen Getrieben in zwei unterschiedlichen Leistungsklassen und dreistufigen Getrieben.

Eine solche Getriebereihe ist aus DE-U-9 404 877 bekannt.

Für eine kostengünstige Fertigung und Lagerhaltung ist es wünschenswert, die verschiedenen Getriebe einer Getriebereihe mit möglichst vielen gleichartigen Komponenten nach dem Baukastenprinzip aufbauen zu können. Dies sollte jedoch nicht zu Lasten des Leistungsbereichs und der übersetzungsverhältnisse der Getriebe gehen.

Der vorliegenden Erfindung liegt die Aufgabe zugrunde, eine Getriebereihe aus Stirnrad- und Flachgetrieben vorzuschlagen, die diese Anforderungen in besonderem Maße erfüllt.

Die Aufgabe wird mit einer Getriebereihe der eingangs genannten Art erfindungsgemäß dadurch gelöst, dass alle Flachgetriebe das gleiche Gehäuse aufweisen, in dem vier Lagerstellen zur Aufnahme von Wellenlagern von Verzahnungsteilen vorgesehen sind, wobei bei den zweistufigen Getrieben in der ersten und der vierten der Lagerstellen sowie in Abhängigkeit von der Leistungsklasse entweder in der zweiten oder in der dritten Lagerstelle Verzahnungsteile gelagert sind und bei den dreistufigen Getrieben in allen vier Lagerstellen Verzahnungsteile gelagert sind, und dass die Lagerstellen räumlich derart zueinander angeordnet sind, dass der Achsabstand zwischen den in der ersten und der zweiten Lagerstelle gelagerten Verzahnungsteilen unterschiedlich ist zum Achsabstand zwischen den in der ersten und der dritten Lagerstelle gelagerten Verzahnungsteilen und der Achsabstand zwischen den in der zweiten und vierten Lagerstelle gelagerten Verzahnungsteilen unterschiedlich ist zum Achsabstand der in der dritten und vierten Lagerstelle gelagerten Verzahnungsteile.

Bei dieser Getriebereihe ist es möglich, je nach Leistungsbereich der zweistufigen Getriebe die Verzahnungsteile, also Ritzel oder Zahnräder, optimal zu platzieren. Bei den zweistufigen Getrieben in der höheren Leistungsklasse kann in derjenigen der zweiten und dritten Lagerstelle ein Verzahnungsteil gelagert sein, die den größeren Achsabstand zu den in der ersten und vierten Lagerstelle gelagerten Verzahnungsteilen ergibt. Dieser größere Achsabstand hat den Vorteil, dass die Lagerbelastung reduziert und damit die Lagerlebensdauer erhöht wird. Durch den dann möglichen größeren Verzahnungteildurchmesser reduziert sich außerdem die Verzahnungsbelastung. Bei kleineren Leistungen kann ein geringerer Achsabstand zwischen den Verzahnungsteilen gewählt werden, was im Vergleich zu einem größeren Achsabstand den Vorteil hat, dass die Zahnräder bei vergleichbarer Übersetzung kleiner gewählt werden können. Dadurch kann eine große Gesamtübersetzung erzielt werden, ohne das Getriebe aufgrund der Zahnräder der ersten Stufe vergrößern zu müssen.

Weitere Vorteile hinsichtlich der Fertigungskosten und Lagerhaltung lassen sich dadurch erzielen, dass die in den zweiten und dritten Lagerstellen lagerbaren Verzahnungsteile auch in den Stirnradgetrieben der Getriebereihe einsetzbar sein können.

Für eine weitere Vereinheitlichung der benötigten Bauteile können alle Flachgetreibe unabhängig von Stufenzahl, Leistungsklasse und übersetzungsverhältnis das gleiche Endrad aufweisen. Damit lassen sich dennoch Gesamtübersetzungen der Getriebe im Bereich von ca. 7 bis 350 erzielen.

Entweder die zweite oder die dritte Lagerstelle kann außerdem derart ausgebildet sein, dass sie ein Lager für ein Verzahnungsteil eines zweistufigen Getriebes oder ein Lager für ein Verzahnungsteil eines dreistufigen Getriebes aufnehmen kann. Es sind dann keinerlei Nachbearbeitungsschritte am Gehäuse notwendig, falls anstelle eines zweistufigen Getriebes ein dreistufiges Getriebe eingebaut werden soll.

Bei einer bevorzugten Ausgestaltung können außerdem die Gehäuse der Stirnradgetriebe und die Gehäuse der Flachgetriebe gleicher Baugröße die gleiche motorseitige Schnittstelle aufweisen, sodass zum Anschluss verschiedener Motoren keine Adaptionen an den Getriebegehäusen erforderlich sind.

Nachfolgend wird ein bevorzugtes Ausführungsbeispiel einer erfindungsgemäßen Getriebereihe anhand der Zeichnungen näher erläutert.

Es zeigen:

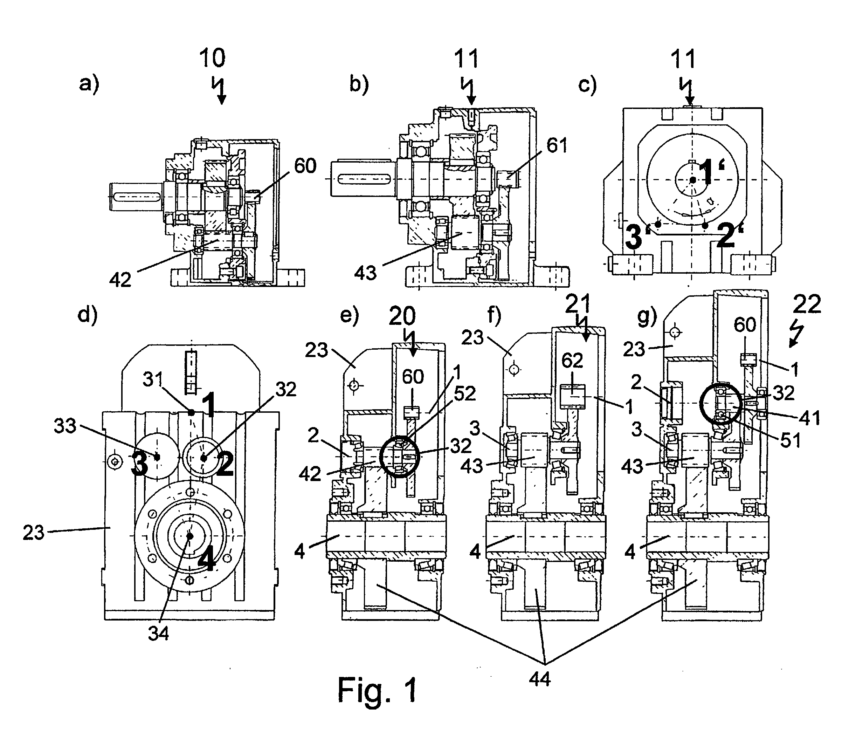

- Fig. 1a, b: Querschnitte durch zwei Stirnradgetriebe unterschiedlicher Baugröße;
- Fig. 1c: eine Ansicht der Getriebeabtriebseite des Stirnradgetriebes aus Fig. 1b;
- Fig. 1d: eine abtriebseitige Ansicht eines Flachgetriebes;
- Fig. 1e: einen Schnitt durch das Flachgetriebe aus Fig. 1d entlang der Linie 1-2-4;
- Fig. 1f: einen Schnitt durch das Flachgetriebe aus Fig. 1d entlang der Linie 1-3-4;
- Fig. 1g: einen Schnitt durch das Flachgetriebe entlang der Linie 1-2-3-4.

Die in Fig. 1 gezeigte Getriebereihe weist zwei Stirnradgetriebe 10, 11 sowie drei Flachgetriebe 20, 21, 22 (Fig. 1e bis g) auf. Die Flachgetriebe 20, 21, 22 sind in einem einheitlichen Gehäuse 23 untergebracht, das in Fig. 1d in der Ansicht von der Abtriebseite her gezeigt ist.

Wie Fig. 1d zeigt, sind im Gehäuse 23 vier Lagerstellen 31, 32, 33 und 34 vorgesehen, in denen die Wellen 1, 2, 3, 4 von vier verschiedenen Verzahnungsteilen 41 (Fig. 1g), 42 (Fig. 1e), 43 (Fig. 1f,g) und 44 (Fig. 1e bis g) gelagert werden können. Damit lassen sich zwei zweistufige Getriebe unterschiedlicher Leistungsklassen, wie sie in den Figuren 1e und 1f gezeigt sind, sowie ein dreistufiges Getriebe 22 gemäß Fig. 1g aufbauen. Das Getriebe 20 ist dabei das zweistufige Getriebe der niedrigeren Leistungsklasse, in dem Verzahnungsteile in den Lagerstellen 31, 32 und 34 angeordnet sind. Beim Getriebe 23 der höheren Leistungsklasse hingegen sind Verzahnungsteile in den Lagerstellen 31, 33 und 34 angeordnet. Der Abstand der Wellen 1 und 2 beim Getriebe 20 ist dabei geringer als der Abstand der Wellen 1 und 3 beim Getriebe 21. Auch der Abstand der Wellen 2 und 4 ist geringer als der Abstand der Wellen 3 und 4. Der kleinere Wellenabstand beim Getriebe 20 hat den Vorteil, dass die benötigten Zahnräder zur Erzeugung eines vergleichbaren Übersetzungsverhältnisses kleiner sind als beim Getriebe 23. Dagegen bedeuten die größeren Wellenabstände beim Getriebe 23 eine Entlastung der Lager sowie der Verzahnungen der Zahnräder. Die Lagerstelle 32 ist derart ausgebildet, dass sie sowohl ein Lager 52 für das Ritzel 42 des Getriebes 20 aus Fig. 1e als auch ein Lager 51 für das Ritzel 41 des dreistufigen Getriebes 22 aus Fig. 1g aufnehmen kann.

Weitere Vorteile der erfindungsgemäßen Getriebereihe ergeben sich dadurch, dass die Ritzel 42 und 43 auch in den Stirnradgetrieben 10 und 11 einsetzbar sind. Außerdem entspricht die Position der Wellen 1, 2 und 3 der Verzahnungsteile 41, 42 und 43 der Flachgetriebe 20 bis 22 der räumlichen Anordnung der Wellenpositionen 1', 2' und 3' des Stirnradgetriebes 11, sodass sich eine einheitliche Schnittstelle zur Motorseite hin ergibt, wobei vom Motor in Fig. 1 lediglich schematisch ein Stück der Abtriebswelle 60, 61 und 62 gezeigt ist.

## Patentansprüche

1. Getriebereihe mit stirnradgetrieben (10, 11) und mit Flachgetrieben (20, 21, 22) mit zweistufigen Getrieben (20, 21) in zwei unterschiedlichen Leistungsklassen und dreistufigen Getrieben (22), wobei bei den dreistufigen Getrieben (22) in allen vier Lagerstellen (31 bis 34) Verzahnungsteile (41 bis 44) gelagert sind, und wobei die Lagerstellen (31 bis 34) räumlich derart zueinander angeordnet sind, dass der Achsabstand (1-2) zwischen den in der ersten und der zweiten Lagerstelle (31 und 32) gelagerten Verzahnungsteilen unterschiedlich ist zum Achsabstand (1-3) zwischen den in der ersten und der dritten Lagerstelle (31 und 33) gelagerten Verzahnungsteilen und dass der Achsabstand zwischen den in der zweiten und vierten Lagerstelle (32 und 34) gelagerten Verzahnungsteilen unterschiedlich ist zum Achsabstand (3-4) der in der dritten und vierten Lagerstelle (33 und 34) gelagerten Verzahnungsteile, **dadurch gekennzeichnet, dass** alle Flachgetriebe (20, 21, 22) das gleiche Gehäuse (23) aufweisen, in dem die vier Lagerstellen (31, 32, 33, 34) zur Aufnahme von Wellenlagern (51, 52) von Verzahnungsteilen (41, 42, 43, 44) vorgesehen sind, wobei bei den zweistufigen Getrieben (20, 21) in der ersten und der vierten der Lagerstellen (31, 34) sowie in Abhängigkeit von der Leistungsklasse entweder in der zweiten oder in der dritten Lagerstelle (32 und 33) Verzahnungsteile (42, 43, 44) gelagert sind.

2. Getriebereihe nach Anspruch 1, **dadurch gekennzeichnet, dass** bei den zweistufigen Getrieben (23) in der höheren Leistungsklasse in derjenigen der zweiten und dritten Lagerstelle (32 und 33) ein Verzahnungsteil (42, 43) gelagert ist, die den größeren Achsabstand zu den in der ersten und vierten Lagerstelle (31 und 34) gelagerten Verzahnungsteilen ergibt.

3. Getriebereihe nach Anspruch 1 oder 2, **dadurch gekennzeichnet, dass** die in den zweiten und dritten Lagerstellen lagerbaren Verzahnungsteile (42, 43) auch in den Stirnradgetrieben (10, 11) einsetzbar sind.

4. Getriebereihe nach einem der Ansprüche 1 bis 3, **dadurch gekennzeichnet, dass** alle Flachgetriebe (20, 21, 22) unabhängig von Stufenzahl, Leistungsklasse und Übersetzungsverhältnis das gleiche Endrad (44) aufweisen.

5. Getriebereihe nach einem der Ansprüche 1 bis 4, **dadurch gekennzeichnet, dass** entweder die zweite oder die dritte Lagerstelle derart ausgebildet ist, dass sie ein Lager (52) für ein Verzahnungsteil (42) des zweistufigen Getriebes (20) oder ein Lager (51) für ein Verzahnungsteil (41) des dreistufigen Getriebes (22) aufnehmen kann.

6. Getriebereihe nach einem der Ansprüche 1 bis 5, **dadurch gekennzeichnet, dass** die Gehäuse der Stirnradgetriebe (10, 11) und die Gehäuse (23) der Flachgetriebe (20, 21, 22) gleicher Baugröße die gleiche motorseitige Schnittstelle (1-2-3) aufweisen.

## Claims

1. Transmission series incorporating spur gear systems (10, 11) and flat gear systems (20, 21, 22) with two-stage transmissions (20, 21) in two different power categories and three-stage transmissions (22), with gearing elements (41 to 44) being mounted in all four bearing points (31 to 34) in the case of the three-stage transmissions (22), and the bearing points (31 to 34) being spatially arranged in relation to one another in such a way that the centre-to-centre distance (1-2) between the gearing elements mounted in the first and second bearing points (31 and 32) is different from the centre-to-centre distance (1-3) between the gearing elements mounted in the first and third bearing points (31 and 33) and that the centre-to-centre distance between the gearing elements mounted in the second and fourth bearing points (32 and 34) is different from the centre-to-centre distance (3-4) of the gearing elements mounted in the third and fourth bearing points (33 and 34),
**characterised in that** all the flat gear systems (20, 21, 22) have the same housing (22), in which the four bearing points (31, 32, 33, 34) for locating shaft bearings (51, 52) of gearing elements (41, 42, 43, 44) are provided, and in the case of the two-stage transmissions (20, 21) there being mounted gearing elements (42, 43, 44) in the first and the fourth of the bearing points (31, 34) and, dependent on the power category, either in the second or in the third bearing point (32 and 33).

2. Transmission series according to claim 1, **characterised in that** in the case of the two-stage transmissions (23), in the higher power category a gearing element (42, 43) is mounted in whichever of the second and third bearing points (32 and 33) produces the bigger centre-to-centre distance in relation to the gearing elements mounted in the first and fourth bearing points (31 and 34).

3. Transmission series according to claim 1 or 2, **characterised in that** the gearing elements (42, 43) which are adapted to be mounted in the second and third bearing points can also be deployed in the spur gear systems (10, 11).

4. Transmission series according to any of claims 1 to 3, **characterised in that** all the flat gear systems (20, 21, 22) feature the same terminal gear (44), irrespective of the number of stages, the power category and the transmission ratio.

5. Transmission series according to any of claims 1 to 4, **characterised in that** either the second or the third bearing point is configured in such a way that it is able to take a bearing (52) for a gearing element (42) of the two-stage transmission (20) or a bearing (51) for a gearing element (41) of the three-stage transmission (22).

6. Transmission series according to any of claims 1 to 5, **characterised in that** the housings of the spur gear systems (10, 11) and the housings (23) of the flat gear systems (20, 21, 22) of identical size feature the same interface (1-2-3) on the engine side.

## Revendications

1. Train d'engrenages avec des engrenages à roues droites (10, 11) et avec des engrenages plats (20, 21, 22) avec des engrenages à deux étages (20, 21) dans deux classes de puissance différentes et des engrenages à trois étages (22), dans les engrenages à trois étages (22) des éléments dentés (41 à 44) étant montés dans tous les quatre points d'appui (31 à 34), et les points d'appui (31 à 34) étant disposés spatialement les uns par rapport aux autres de façon que l'entraxe (1-2) entre les éléments dentés montés dans les premier et deuxième points d'appui (31 et 32) soit différent de l'entraxe (1-3) entre les éléments dentés montés dans les premier et troisième points d'appui (31 et 33) et que l'entraxe entre les éléments dentés montés dans les deuxième et quatrième points d'appui (32 et 34) soit différent de l'entraxe (3-4) entre des éléments dentés montés dans les troisième et quatrième points d'appui (33 et 34), **caractérisé en ce que** tous les engrenages plats (20, 21, 22) comportent le même carter (23) dans lequel sont prévus les quatre points d'appui (31, 32, 33, 34) pour recevoir des paliers d'arbre (51, 52) d'éléments dentés (41, 42, 43, 44), dans les engrenages à deux étages (20, 21) des éléments dentés (42, 43, 44) étant montés dans le premier et quatrième points d'appui (31, 34) ainsi que, en fonction de la classe de puissance, soit dans le deuxième soit dans le troisième point d'appui (32 et 33).

2. Train d'engrenages selon la revendication 1, **caractérisé en ce que**, dans les engrenages à deux étages (23), dans la classe de puissance la plus élevée, dans chacun des deuxième et troisième points d'appui (32 et 33), est monté un élément denté (42, 43) qui détermine le plus grand entraxe par rapport aux éléments dentés montés dans les premier et quatrième points d'appui (31 et 34).

3. Train d'engrenages selon la revendication 1 ou 2, **caractérisé en ce que** les éléments dentés (42, 43) pouvant être montés dans les deuxième et troisième points d'appui peuvent aussi être introduits dans les engrenages à roues droites (10, 11).

4. Train d'engrenages selon l'une des revendications 1 à 3, **caractérisé en ce que** tous les engrenages plats (20, 21, 22) comportent la même roue terminale (44) indépendamment du nombre d'étages, de la classe de puissance et du rapport de transmission.

5. Train d'engrenages selon l'une des revendications 1 à 4, **caractérisé en ce que** soit le deuxième soit le troisième point d'appui est conçu de façon qu'il puisse recevoir un palier (52) pour un élément denté (42) de l'engrenage à deux étages (20) ou un palier (51) pour un élément denté (41) de l'engrenage à trois étages (22).

6. Train d'engrenages selon l'une des revendications 1 à 5, **caractérisé en ce que** le carter des engrenages à roues droites (10, 11) et le carter (23) des engrenages plats (20, 21, 22) de mêmes dimensions de structure présentent le même endroit de montage (1-2-3) du côté moteur.
